# FASCICULE DE BREVET EUROPEEN

(11) **EP 2 013 981 B1**
(45) Date de publication et mention de la délivrance du brevet: **25.05.2011**
(21) Numéro de dépôt: 07728599.7
(22) Date de dépôt: 27.04.2007
(51) Int. Cl.: H04B 1/713

(54) **PROCEDE ET DISPOSITIF DE COMMUNICATION PAR SAUT DE FREQUENCE**
VERFAHREN UND EINRICHTUNG ZUR VERSTÄRKTEN FREQUENZSPRUNGKOMMUNIKATION
STRENGTHENED FREQUENCY HOPPING COMMUNICATION METHOD AND DEVICE

(30) Priorité: 28.04.2006 FR 0603866
(43) Date de publication de la demande: 14.01.2009
(73) Titulaire: THALES, 92200 Neuilly sur Seine (FR)
(72) Inventeur: HETHUIN, Serge, F-92400 Courbevoie (FR); DUPREZ, Adrien, F-75017 Paris (FR)
(74) Mandataire: Dudouit, Isabelle
(86) Numéro de dépôt international: PCT/EP2007/054144
(87) Numéro de publication internationale: WO 2007/125093

(56) Documents cités:
- US-A1- 2005 135 229
- US-A1- 2005 281 317
- US-A1- 2006 062 279
- MOON FONE WONG ET AL: "Performance analysis of OFDM/FHMA hybrid system operation in ISM band" MILITARY COMMUNICATIONS CONFERENCE, 1996. MILCOM '96, CONFERENCE PROCEEDINGS, IEEE MCLEAN, VA, USA 21-24 OCT. 1996, NEW YORK, NY, USA,IEEE, US, vol. 2, 21 octobre 1996 (1996-10-21), pages 369-373, XP010203878 ISBN: 0-7803-3682-8

## Description

L'invention concerne un procédé de communication par saut de fréquence. Elle s'applique, par exemple, pour l'accès d'utilisateurs à un réseau de communication.

Le principe de la communication par saut de fréquence est de transmettre des données (informations, vidéo, phonie, ...) successivement sur une variété de canaux fréquentiels, de manière pseudo-aléatoire.

Dans les applications civiles, cette technique peut être introduite pour traiter notamment deux problématiques :
o Les évanouissements ou fading : les signaux radio sont sujets à des évanouissements, qui sont approximativement distribués selon la loi de Rayleigh. Les évanouissements de type Rayleigh étant sélectifs en fréquence, le saut de fréquence couplé à du codage canal et à de l'entrelacement permet de moyenner les risques de perdre de l'information. Cette amélioration de la qualité du lien de transmission est d'autant plus nécessaire lorsque les noeuds sont en mouvement.
o Les interférences : sans saut de fréquence, les signaux forts issus des cellules voisines affectent continûment la communication. Avec du saut de fréquence aléatoire, les cellules utilisent des séquences de saut pseudo-aléatoires, rendant ainsi les interférences aléatoires.

Dans certaines applications en réseau, l'ensemble d'un même réseau connaît une loi de saut de fréquence. Un noeud arrivant tardivement dans le réseau se synchronise sur les changements de fréquences et détermine l'avancement dans la séquence pseudo-aléatoire grâce à la connaissance de la loi de saut. Un noeud transmet au sein d'un palier de fréquence. A chaque nouveau palier correspond une nouvelle fréquence. Un temps de garde est prévu au début de chaque palier pour permettre à la chaîne radio de synthétiser la nouvelle fréquence. Ce temps est lié à la performance du synthétiseur et à la précision fréquentielle souhaitée. Typiquement, ce temps varie entre 200µs à quelques ms. Certaines architectures de système de communication mettent en oeuvre deux synthétiseurs pour être plus rapide.

Dans le domaine de la Défense et de la Sécurité, le mécanisme de saut de fréquence est utilisé pour lutter contre le brouillage et renforcer la discrétion.

Pour lutter contre les multi-trajets, diverses techniques connues de l'Homme du métier peuvent être utilisées, par exemple, les techniques d'égalisation, d'étalement de spectre, les porteuses multiples.

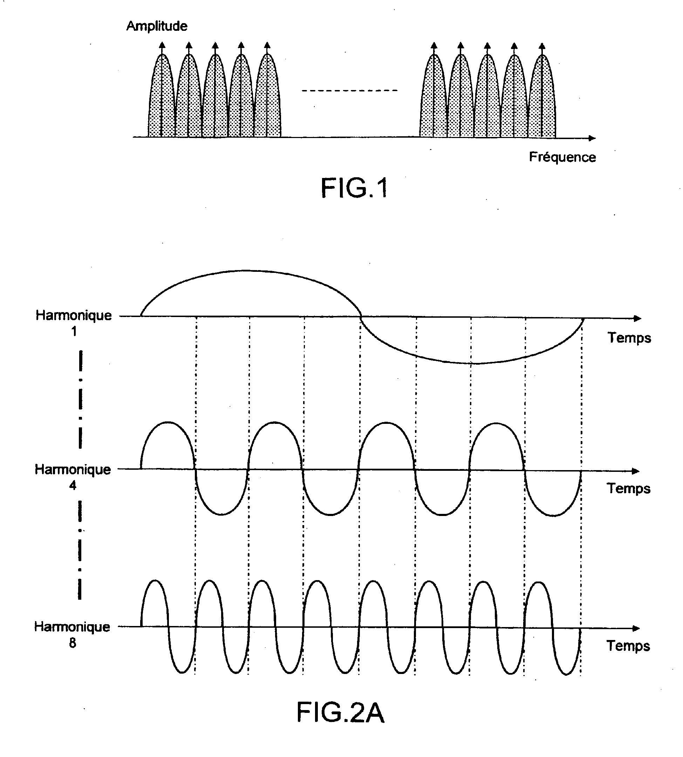

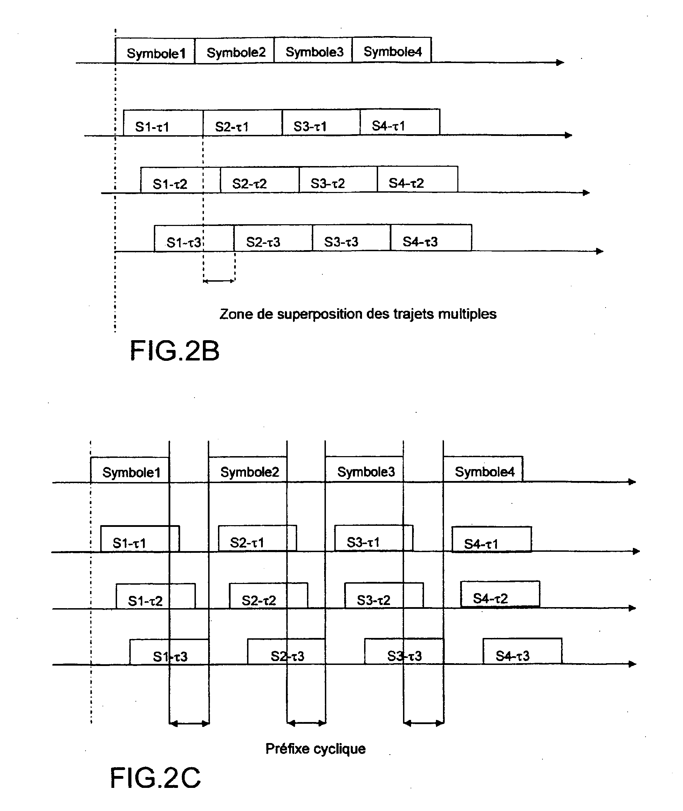

Il est connu de l'art antérieur d'utiliser la technique de multiplexage orthogonal OFDM pour les communications à saut de fréquence. Les figures 1 et 2 représentent une modulation multi-porteuses. La technique OFDM (en anglo-saxon Orthogonal Frequency Division Multiplex) est une modulation multi-porteuses, c'est-à-dire composée d'un ensemble de porteuses orthogonales. L'orthogonalité de la modulation OFDM est effectuée en choisissant des fréquences harmoniques d'une fréquence de base et en les utilisant sur une durée multiple de la période de l'harmonique de base.

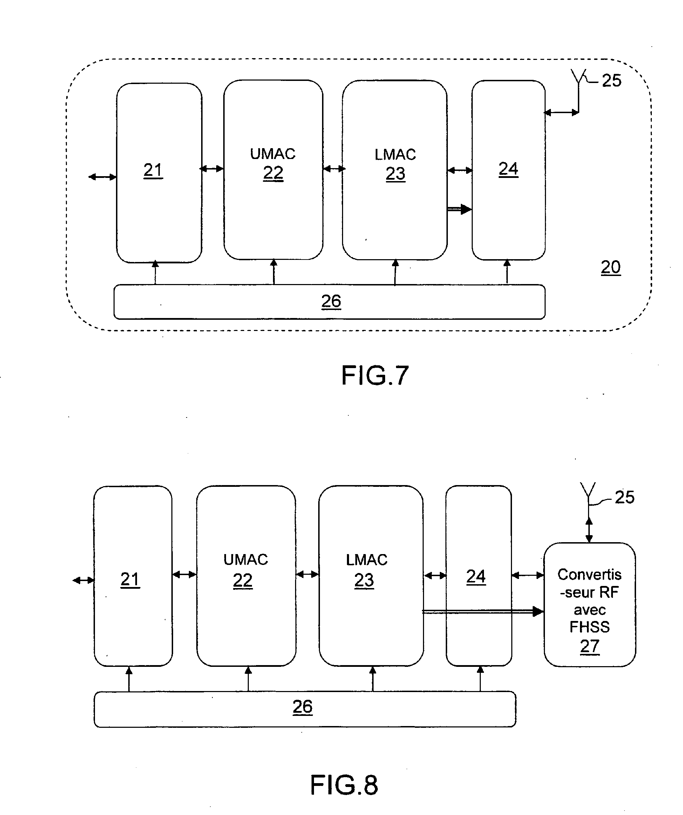

Dans l'exemple donné aux figures 2A, 2B, 2C, 8 sous-porteuses sont utilisées (fo, 2f₀, 3f₀, 4f₀, 5f₀, 6f₀, 7f₀, 8f₀). Cependant, en règle générale, on utilise également la composante continue qui est orthogonale avec toute sinusoïde pour peu que l'on intègre l'énergie sur une durée égale ou multiple d'une période de f₀. Dans ce cas, on utilise la composante continue et les harmoniques f₀ à 7f₀. Chacune de ces harmoniques est modulée par un signal à transmettre avec une modulation choisie parmi les modulations de phase (BPSK, QPSK, ...) ou parmi les modulations d'amplitude (16QAM, 64QAM, 256QAM, ...). Plus les modulations sont efficaces en densité de transmission par Hz utilisé et plus la réduction de portée est importante.

Un symbole transmis est l'ensemble des informations binaires transmises sur les différentes porteuses du multiplex OFDM. Ainsi, dans l'exemple donné aux figures 2A, 2B, 2C, le symbole est constitué des informations binaires sur les 8 porteuses f₀ à 8f₀. Sachant que 1 bit, 2 bits, 4 bits, 6 bits, 8 bits sont déduits respectivement d'un symbole en modulations BPSK, QPSK, 16QAM, 64QAM, 256QAM, l'ensemble des informations transmises par un symbole complet OFDM est donc, selon les modulations précédentes citées, 8, 16, 32, 48 ou 64 bits.

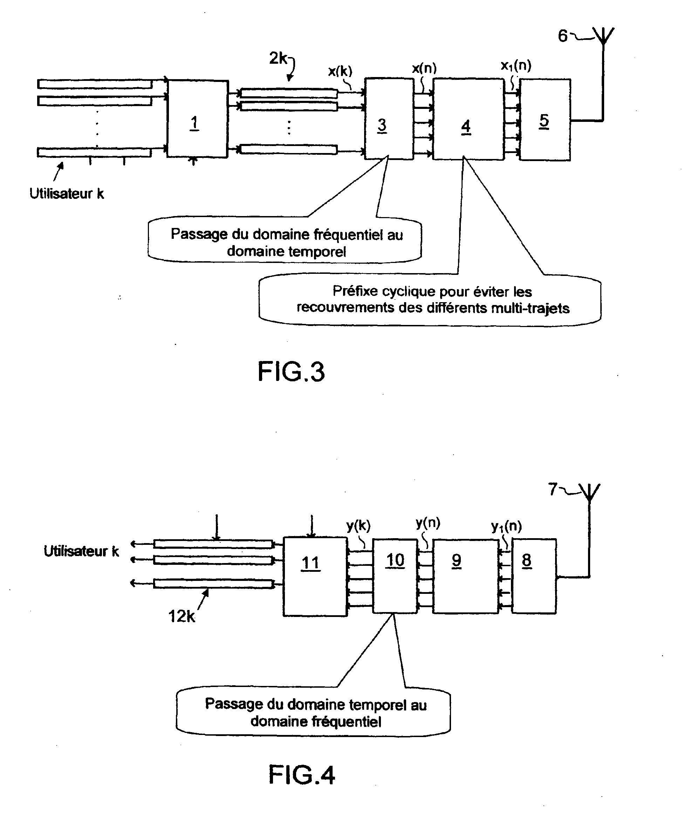

La figure 3 schématise un exemple d'émetteur OFDMA (cas général avec plusieurs utilisateurs au sein d'un même symbole). Il comporte par exemple les modules suivants :
o Un dispositif 1 d'allocation des sous-porteuses en fonction des utilisateurs avec différentes modulations,
o Plusieurs moyens de modulation 'adaptative', 2k, le nombre de ces moyens est par exemple égal au nombre des utilisateurs k,
o Un dispositif 3 adapté à faire passer du domaine fréquentiel au domaine temporel,
o Un dispositif 4 pour insérer un temps de garde ou préfixe cyclique pour éviter les recouvrements des différents multi-trajets,
o Un dispositif 5 P/S (Parallel to Serial)
o Une antenne 6 d'émission.

La figure 4 représente un exemple d'architecture pour un récepteur OFDMA. Il comprend par exemple les modules suivants :
o Une antenne de réception 7, en liaison avec un dispositif S/P 8
o Un dispositif 9 adapté à supprimer le préfixe cyclique introduit à l'émission,
o Un dispositif 10 permettant le passage du domaine temporel au domaine fréquentiel,
o Un moyen 11 adapté à extraire les sous-porteuses pour chaque utilisateur k,
o Plusieurs dispositifs 12k de démodulation adaptative.

Dans certains standards, par exemple, HIPERLAN2 et IEEE802.16d, l'OFDM est utilisée avec un protocole d'accès du type TDMA. Un créneau temporel ou time slot du cycle TDMA (Time division multiple access) est alors un nombre entier de symboles OFDM.

Il est également possible d'utiliser l'OFDM pour partager l'accès entre plusieurs utilisateurs par la technique de sous-canalisation (en anglais sub-channelization) ou avec de l'OFDMA (Orthogonal Frequency Division Multiple Access) où les N porteuses ne sont pas allouées à un seul utilisateur. L'ensemble des N porteuses est subdivisé en M sous-ensembles de porteuses. Les ressources sont allouées sous-ensemble par sous-ensemble. Les M utilisateurs transmettent de manière concurrente, au sein du même symbole OFDM.

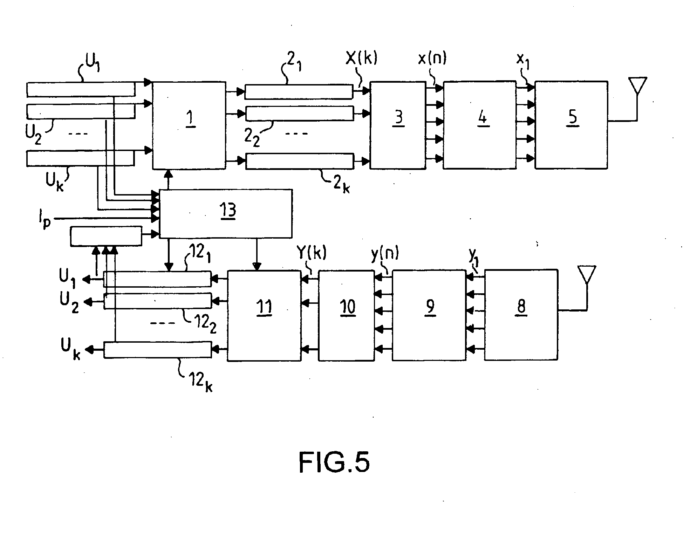

La figure 5 schématise une architecture de réseau de communication basé sur de l'OFDMA. Ce dernier nécessite une allocation des ressources entre les différents utilisateurs. Cette allocation est fonction de la qualité de service et du débit demandé par chaque utilisateur et de l'environnement (réponse du canal pour chaque utilisateur, interférences, ...).

Dans l'exemple de la figure 5, K utilisateurs communiquent au sein d'un même symbole OFDM.

Les modules identiques aux figures 3 et 4 et 5 portent les mêmes références. En plus des schémas des figures 3 et 4 concernant respectivement un émetteur et un récepteur, le système OFDMA comprend notamment un module 13 d'allocation de ressources qui reçoit les demandes d'allocation des différents utilisateurs, une information sur la puissance maximale nécessaire, une information sur le canal de l'utilisateur, et qui délivre des signaux vers le dispositif d'allocation des sous-porteuses, et vers le dispositif d'extraction des sous-porteuses pour les différents utilisateurs, ainsi que vers les modules de démodulation adaptative.

Différents algorithmes d'allocation de ressources existent dans la littérature. Ces algorithmes permettent notamment d'allouer les sous-porteuses aux utilisateurs et de déterminer le type de modulation/codage pour chacune de ces porteuses. Ces algorithmes sont déterminants pour exploiter au mieux l'OFDMA. En effet, les sous-porteuses « favorables » pour un utilisateur, c'est-à-dire, celles subissant le moins de perturbations, de l'OFDMA peuvent être inutilisables ou moins favorables pour d'autres utilisateurs. Les algorithmes d'allocation de ressources sont responsables de tirer profit de cette diversité.

Le concept FH-OFDMA (ou Frequency Hopping OFDMA) est connu de l'art antérieur (Hikmet Sari 1997 « Orthogonal frequency-division multiple access with frequency hopping and diversity » in Multi-carrier Spread-Spectrum, K. Fazel and G. P. Fettweiss, Eds. Kluwer Academic Publishers, 1997, pp 57-68) dans le cas où le canal de transmission n'est pas connu. Un canal pouvant contenir des porteuses inutilisables à cause d'interférences, on assigne à chaque utilisateur une séquence de porteuses plutôt qu'une porteuse en particulier. La séquence utilisée est en général incrémentale.

L'étalement de spectre se fait traditionnellement en introduisant au niveau de la radio un synthétiseur à accord rapide, de l'ordre de 100 à 150µs, pour sauter sur une grande largeur de bande.
Le saut de fréquence est appliqué pour protéger la synchronisation des noeuds entre eux. Dans le cas d'une synchronisation (temporelle/fréquentielle) utilisant des signaux dédiés (cas des court et long préambules du 802.16), une protection de synchronisation peut être mise en oeuvre par une séquence de signaux tirée pseudo-aléatoirement. Ainsi, les motifs de synchronisation ne sont pas systématiquement les mêmes mais varient, de plus, selon une séquence définie par tirage pseudo-aléatoire.

Le document de Moon Fone Wong et al, intitulé « performance analysis of OFDM/FHMA hybrid system operation in ISM band » Military Communications conference, 1996, divulgue un système hybride OFDM/FHMA permettant de travailler dans la bande de fréquence pour la voix et pour des transmissions de base débit avec une capacité de multiples utilisateurs.

Le brevet US 2005/1315229 décrit un procédé de communication dans lequel les données transitent sur des supports fréquentiels variables au cours du temps, un support fréquentiel étant défini comme un couple sous-ensemble de porteuses dans un canal d'un ensemble de canaux fréquentiels.

Le brevet US 2006/062279 décrit un émetteur numérique à saut de fréquence et sa méthode qui peut être appliqué dans un système de communication.

L'invention a notamment pour but de pallier les inconvénients précités. A cet effet, l'invention a pour objet un procédé de communication dans lequel les données transitent sur des supports fréquentiels variables au cours du temps. Un support fréquentiel est défini comme un couple sous-ensemble de porteuses (sous-canal) dans un canal d'un ensemble de canaux fréquentiels (RF). Le choix des supports fréquentiels est issu d'un tirage pseudo-aléatoire.

L'invention concerne un procédé de communication dans lequel les données transitent sur des supports fréquentiels variables au cours du temps, un support fréquentiel étant défini comme un couple sous-ensemble de porteuses dans un canal d'un ensemble de canaux fréquentiels (RF) ; le choix des supports fréquentiels étant issu d'un tirage pseudo-aléatoire et caractérisé en ce que l'on combine deux lois de saut pseudo-aléatoires indépendantes, la première étant adaptée au saut de canal et la deuxième au saut de sous-canaux.

Le procédé selon l'invention est utilisé par exemple pour les transmissions mettant en oeuvre le protocole 802.16.

Le procédé et le système selon l'invention offrent notamment les avantages suivants :
- avoir des sauts de fréquence sur une bande importante à chaque début de trame, sur la base d'une loi pseudo-aléatoire,
   o disposer de sauts d'intervalles fréquentiels plus réduits, mais à temps d'accord nul, dans la bande de l'OFDMA à l'intérieur de la trame pour chaque slot (voire même symbole dans certaines conditions), sur la base d'une seconde pseudo-aléatoire.
   o ne pas nécessiter de point central pour organiser les échanges,
   o permettre des échanges de type multimédia à très haut débit,
   o compatible de toute procédure d'accès, qu'elle soit centralisée comme, par exemple, le TDMA (Time Division Multiple Access) ou qu'elle soit distribuée comme, par exemple, le TDMA distribué.

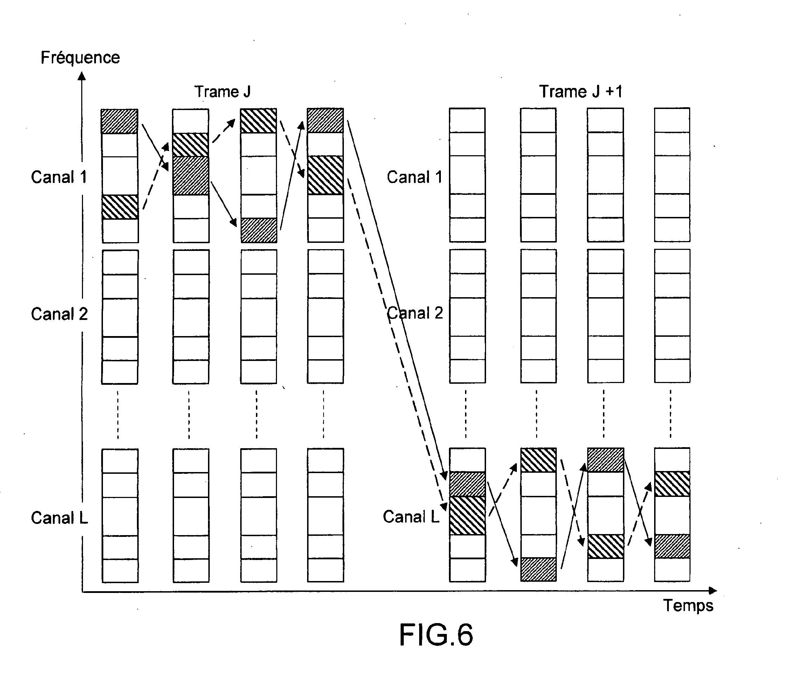

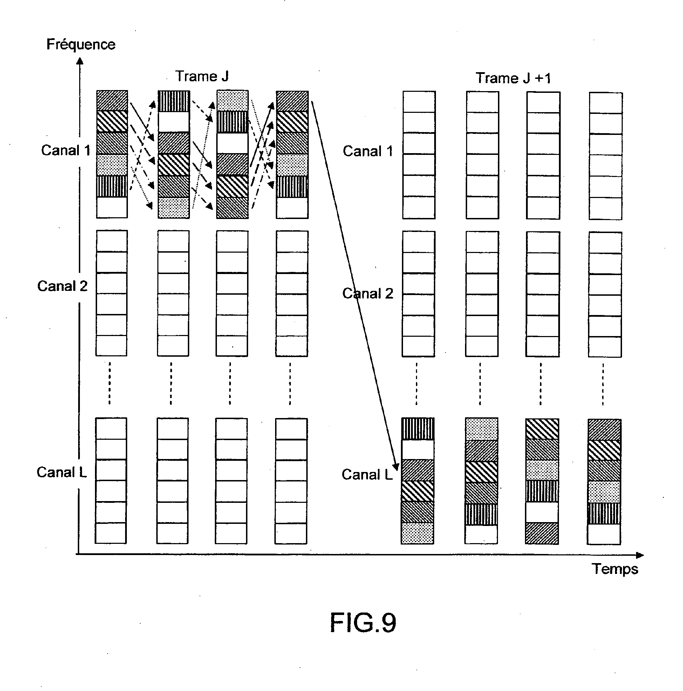

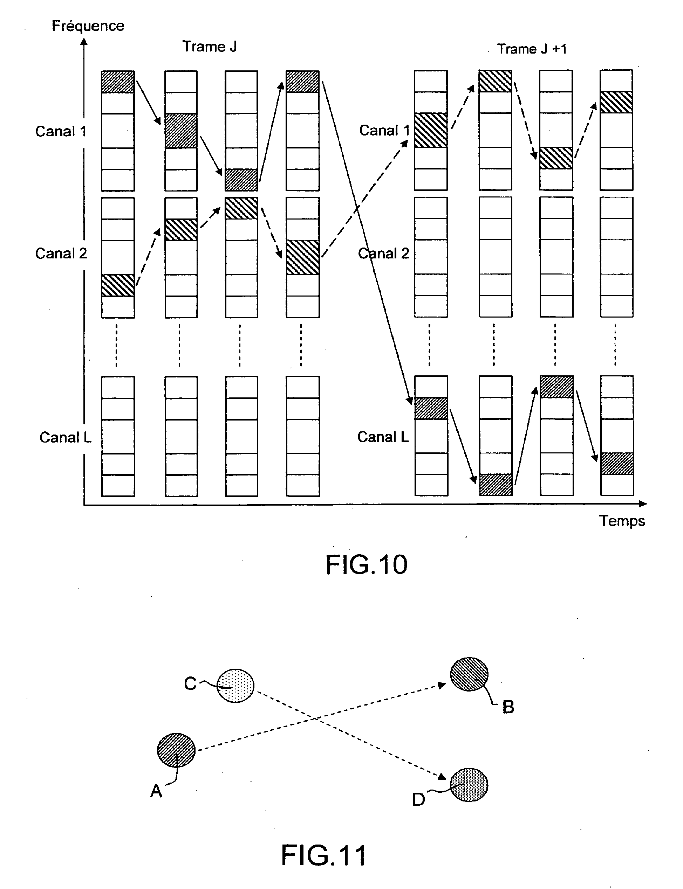

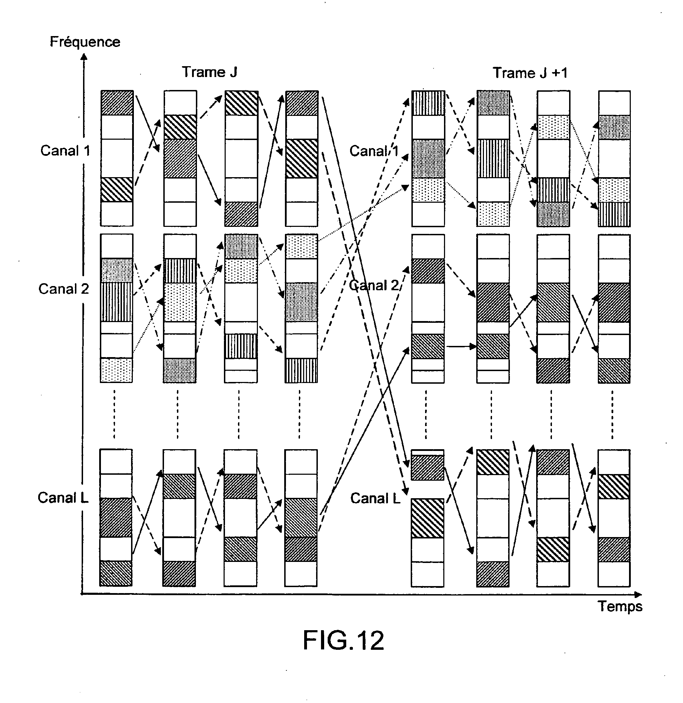

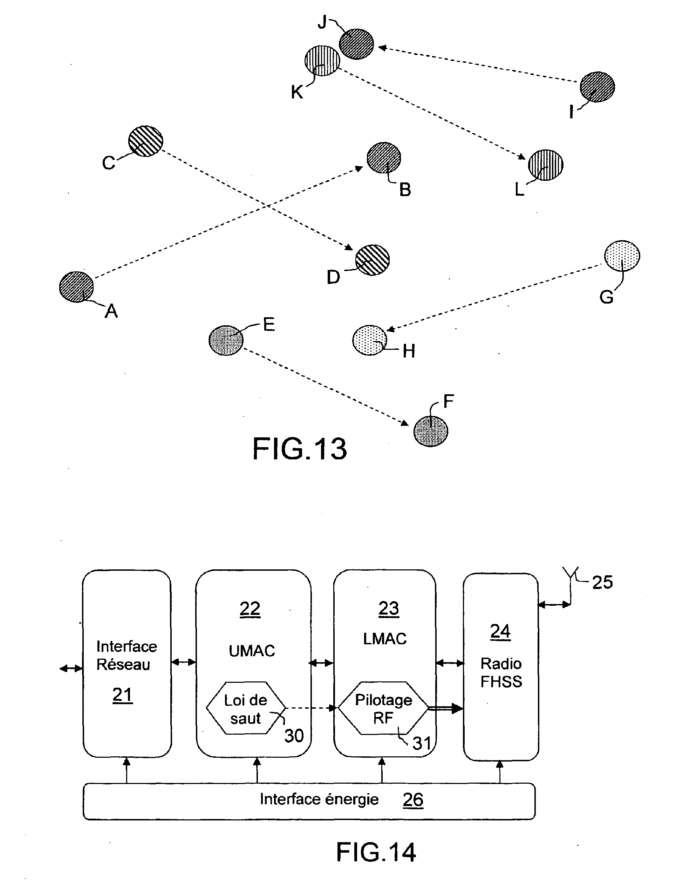

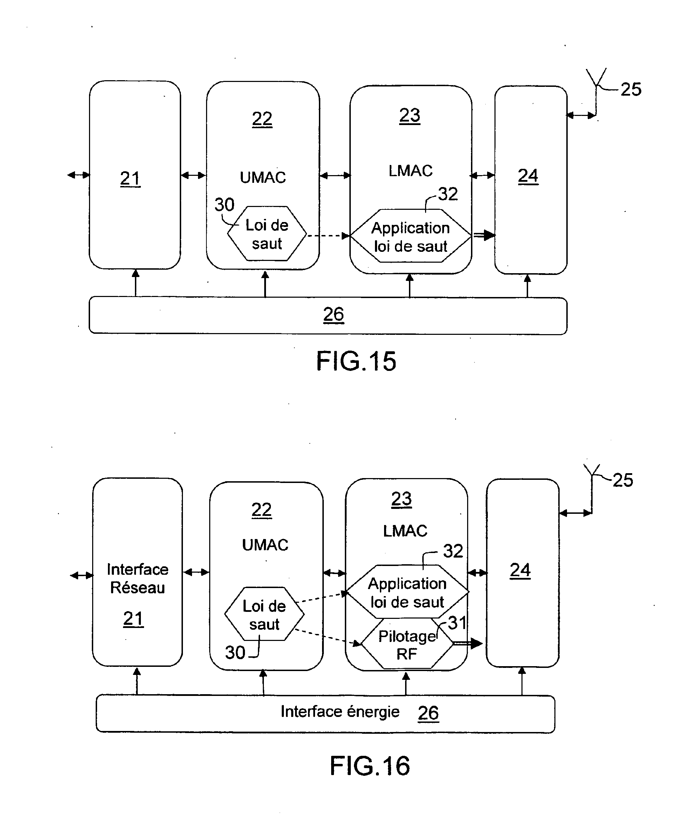

D'autres caractéristiques et avantages de la présente invention apparaîtront mieux à la lecture de la description d'un exemple de réalisation donné à titre illustratif et nullement limitatif, annexé des figurés qui représentent :
o La figure 1 des rappels sur la modulation multi-porteuses et la figure 2 un exemple d'une modulation à 8 porteuses,
o Les figures 2A, 2B, 2C un ensemble de symboles successifs,
o La figure 3, le schéma d'un émetteur OFDMA, et la figure 4 celui d'un récepteur,
o La figure 5, un exemple d'architecture d'un émetteur-récepteur OFDMA,
o La figure 6, un exemple de structure du saut de fréquence combiné selon l'invention,
o Les figures 7 et 8 deux blocs diagrammes de dispositif mettant en oeuvre l'invention,
o La figure 9 un schéma de transmission d'un point central vers plusieurs utilisateurs,
o Les figures 10 et 11, un schéma d'accès mono-utilisateur sur chacune des bandes et un exemple de communications associées,
o Les figures 12 et 13, un schéma d'accès dans le cas multi-utilisateurs et les communications associées,
o Les figures 14, 15, 16 des exemples de mise en oeuvre du procédé selon l'invention.

Le procédé selon l'invention repose notamment, dans le cadre de transmissions entre noeuds, sur la combinaison du saut de fréquence classique, par asservissement d'un synthétiseur, par exemple, et instantané par utilisation de blocs partiels de sous-porteuses d'une modulation multi-porteuses.

La figure 6 schématise un premier exemple de mise en oeuvre du procédé selon l'invention, dans un diagramme temps-fréquence.

Sur cette figure, un canal représente une fréquence radio (RF) donnée et dans cet exemple chaque canal Ci est partagé en sous-canaux Cij. Il s'agit d'un partage " logique ". Un sous canal est un ensemble de porteuses OFDM non nécessairement voisines.

Le procédé met en oeuvre un double mécanisme de saut de fréquence réalisée par un processeur adapté inséré par exemple dans un dispositif existant de type COTS (abrégé de Components Off The Shelf, initiales qui désignent dans le domaine des « produits sur étagère »). Une implémentation sur matériel spécifique est cependant tout à fait envisageable.

La figure 7 représente un exemple de produit COTS 20 du commerce permettant la mise en oeuvre du procédé selon l'invention.

Le système comporte par exemple, une interface réseau 21, en liaison avec la couche d'accès supérieure MAC (UMAC ou Upper Medium Access Control) 22, communiquant avec la couche d'accès inférieure 23, LMAC. Au niveau de cette couche LMAC, se trouvent un composant programmable de type FPGA (Field Programmable Gate Array) et un ASIC PHY. Tous les éléments sont en liaison avec une interface énergie 26. La radio comprend un synthétiseur de fréquence 24.

Selon une deuxième variante de réalisation, basée sur du COTS, représentée à la figure 8, dans laquelle on veut pouvoir travailler dans une autre gamme de fréquences, la partie radio native est conservée et le saut de fréquence classique est introduit au niveau d'un convertisseur radio fréquence RF, 27, piloté par la partie numérique du COTS.

Le procédé selon l'invention mis en oeuvre, par exemple, dans les systèmes décrits aux figures 7 et 8 :
o la mise en oeuvre combinée de deux lois de saut pseudo-aléatoires indépendantes, l'une pour le saut de canal et l'autre pour le saut de sous-canaux OFDMA au sein d'un canal, ou encore
o une loi unique gérant à la fois le passage d'un canal à un autre et l'exploitation des sous-canaux dans un canal.

L'ensemble des données transmises ainsi que la signalisation est protégée par le saut de fréquence.

Il est possible d'utiliser une loi unique pour le saut de fréquence classique d'une part et le saut de fréquence instantané d'autre part, en prenant en compte les contraintes des deux bandes cumulées. En effet, la combinaison de lois indépendantes facilite la conciliation des contraintes d'orthogonalités des bandes et d'adaptation du nombre de porteuses au débit demandé.

Ainsi, si l'on imagine une loi cumulant des sauts classiques sur N bandes de BW MHz avec des possibilités de sauts instantanés sur chacune des N bandes par M sous-bandes de b MHz (M=BW/b), alors la sortie de l'algorithme est, par exemple, du type :
Couple(nb,ns) = tirage(n,i)
avec nb = numéro de la bande à utiliser, ns = numéro de la sous-bande à utiliser, pour la trame n et le symbole i.

Dans le cas de l'utilisation d'une sous-bande et plus généralement de l'ensemble des sous-bandes pour une seule transmission, la loi de saut est optimisée pour utiliser au mieux l'ensemble des ressources fréquentielles.

La figure 9 représente l'application du procédé dans le cas d'une transmission par un point central et pour des accès multi-utilisateurs centralisé.

L'un des exemples d'application du procédé selon l'invention correspond à la transmission de flux d'informations sélectifs vers un ensemble de terminaux. Dans ce cas, l'émetteur (ou point central) est unique et l'ensemble des usagers raccordés reçoit le flux d'information qui lui est destiné à travers une séquence de sauts en fréquence. Les différents flux peuvent être protégés par des lois de saut différentes (cas le plus complexe) mais aussi identiques et décalées comme illustré sur la figure 9.

Les étapes exécutées par le procédé selon l'invention dans les parties LMAC et UMAC des structures, notamment celles décrites par exemple aux figures 7 et 8, sont les suivantes :

Au niveau de la couche UMAC, avant le début de chaque trame ou d'un GROUPE de trames :
- Préparation des différents emplacements de fréquence à utiliser pour chaque symbole (i=1, l) dans chaque canal utilisé dans les trames suivantes k, k+1, ..., k+N (N pouvant valoir, selon l'anticipation recherchée, 1 à 4) pour la transmission vers un abonné A :
   Couple(nb,ns)_{A, n, i} = tirage(n,i)
      pour n : n° de trame allant de k à k+N
      pour i : n° de symbole allant de 1 à l
      avec nb = numéro de la bande à utiliser
      ns = numéro de la sous-bande à utiliser
- De même, préparation des différents emplacements de fréquence à utiliser pour chaque symbole (i=1, l) dans chaque canal utilisé dans les trames suivantes k, k+1, ..., k+N pour la transmission vers l'abonné B :
   nb_{B, n, i} = nb
   ns_{B, n, i} = (ns_{A, n, i} +1)modulo NS
   avec NS : nombre de sous-bandes disponibles dans un canal
   Remarque 1 : Ces index représentent soit des valeurs physiques, soit des valeurs logiques i.e. dont les valeurs cibles physiques sont connues à travers une table de correspondance.
   Remarque 2: Les index physiques de sous-bandes utilisés sont consécutifs modulo NS.
   Remarque 3 : Les sous-bandes utilisées peuvent donc être disjointes, c'est-à-dire non consécutives, soit à cause du modulo dans le cas d'index physiques soit implicitement grâce à la table de correspondance dans le cas d'index logiques.
- De même, préparation des différents emplacements de fréquence à utiliser pour chaque symbole (i=1, l) dans chaque canal utilisé dans les trames suivantes k, k+1, ..., k+N pour la transmission vers l'abonné C :
   nb_{C, n, i} = nb
   ns_{C, n, i} = (ns_{B, n, i} +1)modNS
   avec NS : nombre de sous-bandes disponibles dans un canal
- Et ainsi de suite pour l'ensemble des abonnés D, ...
- Dans le point central, préparation des différents symboles (i=1, l) à envoyer sur les trames suivantes k, k+1, ..., k+N vers les abonnés A, B, C, D, ... : canaux, emplacements de fréquence respectifs dans le canal, informations respectives à transmettre sur ces emplacements fréquentiels,
- Envoi de l'ensemble des canaux, des emplacements de fréquence, des symboles à la partie LMAC et au modem.
Au niveau LMAC, avant le début de chaque trame :
- Application sur le synthétiseur RF du numéro de canal désiré pour la trame à venir.
Au niveau LMAC, juste avant chaque symbole à transmettre :
- Dans le point central, envoi à la couche PHY des informations binaires à transmettre sur les emplacements fréquentiels respectifs pour fabrication par la couche PHY du symbole à transmettre.
La partie réception est totalement réciproque.

Par exemple, dans la figure 10, A et B sont les seuls à communiquer dans le canal 1, pour la trame J, puis ils passent dans le canal L pour la trame J+1 ; C et D sont les seuls à communiquer dans le canal 2 pour la trame J et sautent dans le canal 1 pour la trame J+1.

Le procédé coordonne l'accès des différents utilisateurs aux différentes bandes, même si un seul utilisateur peut accéder à un instant donné aux différentes sous-bandes d'une bande donnée.

Les opérations à effectuer, les noeuds étant considérés en synchronisation temporelle, dans les parties LMAC et UMAC des structures, notamment celles représentées en figures 7 et 8, sont les suivantes :
Au niveau UMAC des noeuds A et B (voir figure 11), avant le début de chaque trame ou d'un GROUPE de trames :
   - Préparation des différents emplacements de fréquence à utiliser pour chaque symbole (i=1, l) dans chaque canal utilisé dans les trames suivantes k, k+1, ..., k+N (N pouvant valoir, selon l'anticipation recherchée, 1 à 4) pour la transmission entre l'abonné A et l'abonné B :
      Couple (nb,ns)_{A, n, i} = tirage_1 (n, i)
         pour n : n° de trame allant de k à k+N
         pour i : n° de symbole allant de 1 à l
         avec nb _{A, n, i} = numéro de la bande à utiliser en trame n
         ns _{A, n, i} = numéro de la sous-bande à utiliser au slot i de la trame n.
Au niveau UMAC des noeuds C et D, avant le début de chaque trame ou d'un GROUPE de trames :
   - Préparation des différents emplacements de fréquence à utiliser pour chaque symbole (i=1, l) dans chaque canal utilisé dans les trames suivantes k, k+1, ..., k+N pour la transmission entre l'abonné C et l'abonné D :
      Couple (nb,ns)_{C, n, i} = tirage_2(n, i)
         pour n : n ° de trame allant de k à k+N
         pour i:n° de symbole allant de 1 à l
         avec nb _{C, n, i} = numéro de la bande à utiliser en trame n
         ns _{C, n, i} = numéro de la sous-bande à utiliser au
         slot i de la trame n
         Fonction « tirage_2 » orthogonale à la fonction « tirage_1 ».
Au niveau UMAC du noeud A (respectivement B), avant le début de chaque trame ou d'un GROUPE de trames :
   - Préparation des différents symboles (i=1, l) à envoyer (respectivement recevoir) sur les trames suivantes k, k+1, ..., k+N vers l'abonné B (respectivement de l'abonné A) : canal, emplacement de fréquence dans le canal, informations à transmettre sur l'emplacement fréquentiel de chaque symbole successif considéré,
   - Envoi de l'ensemble des canaux, des emplacements de fréquence, des symboles à la partie LMAC (respectivement réception des symboles).
Au niveau UMAC du noeud C (respectivement D), avant le début de chaque trame ou d'un GROUPE de trames :
   - Préparation des différents symboles (i=1, l) à envoyer (respectivement recevoir) sur les trames suivantes k, k+1, ..., k+N vers l'abonné D (respectivement de l'abonné C) : canal, emplacement de fréquence dans le canal, informations à transmettre sur l'emplacement fréquentiel de chaque symbole successif considéré,
   - Envoi de l'ensemble des canaux, des emplacements de fréquence, des symboles à la partie LMAC (respectivement réception des symboles).
Au niveau LMAC pour tous les noeuds, avant le début de chaque trame :
   - Application sur le synthétiseur RF du numéro de canal désiré pour la trame à venir.
Au niveau LMAC, juste avant chaque symbole transmis (respectivement à la fin de chaque symbole reçu) :
   - Envoi à (respectivement réception de) la couche PHY des informations binaires à transmettre (respectivement à recevoir) sur les emplacements fréquentiels respectifs pour fabrication par la couche PHY du symbole à transmettre/recevoir.

   La figure 12 représente un exemple de mise en oeuvre pour le cas général multi-utilisateurs et la figure 13 la répartition de différents utilisateurs. Les étapes mises en oeuvre dans le procédé selon l'invention sont, par exemple, décrites ci-après.
   Les opérations à effectuer, les noeuds étant considérés en synchronisation temporelle, dans les parties LMAC et UMAC des structures, notamment celles représentées en figures 7 et 8, sont les suivantes :
Au niveau UMAC de tous les noeuds, avant le début de chaque trame ou d'un GROUPE de trames :
   - Préparation des différents emplacements de fréquence à utiliser pour chaque symbole (i=1, l) dans chaque canal utilisé dans les trames suivantes k, k+1, ..., k+N (N pouvant valoir, selon l'anticipation recherchée, 1 à 4) pour la transmission entre l'abonné A et l'abonné B:
      Couple(nb,ns)_{A, n, i} = tirage_1 (n, i)
         pour n : n° de trame allant de k à k+N
         pour i : n° de symbole allant de 1 à l
         avec nb _{A, n, i} = numéro de la bande à utiliser en trame n
         ns _{A, n, i} = numéro de la sous-bande à utiliser au slot i de la trame n.
Au niveau UMAC des noeuds C et D, avant le début de chaque trame ou d'un GROUPE de trames :
   - Préparation des différents emplacements de fréquence à utiliser pour chaque symbole (i=1, l) dans chaque canal utilisé dans les trames suivantes k, k+1, ..., k+N pour la transmission entre l'abonné C et l'abonné D :
      Couple(nb,ns)_{C, n, i} = tirage_1 bis(n, i)
         pour n : n ° de trame allant de k à k+N
         pour i : n ° de symbole allant de 1 à l
         avec nb_{C, n, i} = numéro de la bande à utiliser en trame n
         ns _{C, n, i} = numéro de la sous-bande à utiliser au slot i de la trame n
         Fonction « tirage_1 bis » orthogonale à la fonction « tirage_1 » pour le tirage des slots dans le canal courant, les canaux tirés étant identiques entre les deux fonctions.
   - Idem pour la préparation des emplacements de fréquence à utiliser pour les transmissions entre les abonnés E et F d'une part et G et H d'autre part mais en utilisant les fonctions tirage_2 et tirage_2bis,
   - Idem pour la préparation des emplacements de fréquence à utiliser pour les transmissions entre les abonnés 1 et J d'une part et K et L d'autre part mais en utilisant les fonctions tirage_3 et tirage_3bis.
Au niveau UMAC du noeud A, avant le début de chaque trame ou d'un GROUPE de trames :
   - Préparation des différents symboles (i=1, l) à envoyer sur les trames suivantes k, k+1, ..., k+N vers l'abonné B : canal, emplacement de fréquence dans le canal, informations à transmettre sur l'emplacement fréquentiel de chaque symbole successif considéré,
   - Envoi de l'ensemble des canaux, des emplacements de fréquence, des symboles à la partie LMAC.
Au niveau UMAC du noeud C, avant le début de chaque trame ou d'un GROUPE de trames :
   - Préparation des différents symboles (i=1, l) à envoyer sur les trames suivantes k, k+1, ..., k+N vers l'abonné D : canal, emplacement de fréquence dans le canal, informations à transmettre sur l'emplacement fréquentiel de chaque symbole successif considéré,
   - Envoi de l'ensemble des canaux, des emplacements de fréquence, des symboles à la partie LMAC.
Et ainsi de suite, pour tous les autres noeuds émetteurs E, G, I, K, ...
Au niveau LMAC pour tous les noeuds, avant le début de chaque trame :
   - Application sur le synthétiseur RF du numéro de canal désiré pour la trame à venir.
Au niveau LMAC, pour tous les noeuds émetteurs, juste avant chaque symbole à transmettre :
   - Envoi à la couche PHY des informations binaires à transmettre sur les emplacements fréquentiels respectifs pour fabrication par la couche PHY du symbole à transmettre.
La partie réception est totalement réciproque.
   Toutes les communications point à point, représentées dans les configurations précédentes, peuvent se généraliser à des communications du type « multicast ».

La figure 14 représente un exemple de mise en oeuvre dans lequel la loi de saut est intégrée dans la partie UMAC et le pilotage RF est intégré dans la partie LMAC. Les deux étapes mises en oeuvre consistent à :
Etape 1 : génération de la fréquence pour la prochaine trame,
Etape 2 : pilotage de la carte RF. Application de la RF commandée et de la dernière CAG (contrôle automatique de gain) associée à cette fréquence.

La figure 15 représente un exemple dans lequel la loi de saut est intégrée dans la partie UMAC et l'application de la loi de saut rapide dans la partie LMAC. Les étapes sont les suivantes :
Etape 1 : génération des porteuses à utiliser pour la transmission de la prochaine trame à partir d'une loi aléatoire,
Etape 2 : dans un composant ou chip PHY, synthèse du symbole OFDM sur les porteuses assignées par le UMAC.

La figure 16 représente une autre variante de mise en oeuvre qui comprend les 2 étapes :
Etape 1 : au niveau de l'UMAC :
   - génération des porteuses à utiliser pour la transmission de la prochaine trame à partir d'une loi aléatoire.
   - génération de la fréquence à mettre en oeuvre dans la prochaine trame
Etape 2 : au niveau de LMAC :
   - composant PHY : synthèse du symbole OFDM sur les porteuses assignées par le UMAC.
   - pilotage de la carte RF. Application de la RF commandée et de la dernière CAG associée à cette fréquence.

Les différentes variantes de mise en oeuvre décrites ci-dessus s'appliquent notamment pour des échanges multiservices entre des véhicules en mouvement d'un même groupe.

Les services associés sont, par exemple, des services de diffusion vidéo d'un noeud vers des noeuds collatéraux, le transfert des données entre certains noeuds selon les phases de changement d'une organisation en réseau, de phonie entre tous les noeuds réseau.

L'invention s'applique notamment pour le standard 802.16, dans la plupart de ses modes, mode PMP, mode MESH centralisé dans lequel on relaye les paquets destinés à des abonnés distants, hors de portée de la station de base aux débits les plus élevés par des noeuds intermédiaires, ou encore dans le mode MESH distribué, qui possède la même fonction, mais avec une topologie suffisamment complexe pour que la station de base ne puisse plus effectuer l'allocation des slots temporels et la délègue à chaque noeud de relayage.
L'invention est utilisée, par exemple, pour la protection de la synchronisation des noeuds par séquence de synchronisation définie par une loi pseudo aléatoire.

## Revendications

1. Procédé de communication dans lequel les données transitent sur des supports fréquentiels variables au cours du temps, un support fréquentiel étant défini comme un couple sous-ensemble de porteuses dans un canal d'un ensemble de canaux fréquentiels (RF) ; le choix des supports fréquentiels étant issu d'un tirage pseudo-aléatoire et **caractérisé en ce que** l'on combine deux lois de saut pseudo-aléatoires indépendantes, la première étant adaptée au saut de canal et la deuxième au saut de sous-canaux.

2. Procédé selon la revendication 1, correspondant à un cas à accès multi-utilisateur centralisé dans lequel un point central transmet des flux d'informations différents vers un ou plusieurs abonnés **caractérisé en ce qu'**il comporte au moins les étapes suivantes :
au niveau de la couche d'accès UMAC (Upper MAC), avant le début de chaque trame ou d'un groupe de trames :
• Préparation des différents emplacements de fréquence à utiliser pour chaque symbole (i=1, ..., l) dans chaque canal utilisé dans les trames suivantes k, k+1, ..., k+N (N entier) pour la transmission entre le point central et le premier abonné A :
Couple(nb,ns)_{A, n, i} = tirage(n, i)
pour n : n ° de trame allant de k à k+N
pour i : n ° de symbole allant de 1 à l
avec nb = numéro de la bande à utiliser
ns = numéro de la sous-bande à utiliser
• Préparation des différents emplacements de fréquence à utiliser pour chaque symbole (i=1, ..., l) dans chaque canal utilisé dans les trames suivantes k, k+1, ..., k+N pour la transmission entre le point central et l'abonné B :
nb_{B, n, i} = nb
ns_{B, n, i} = (ns_{A, n, i} +1)modulo NS
avec NS : nombre de sous-bandes disponibles dans un canal.
Ces index représentent soit des valeurs physiques, soit des valeurs logiques dont les valeurs cibles physiques sont connues à travers une table de correspondance, les index physiques de sous-bandes utilisés sont consécutifs modulo NS,
• Au niveau du point central, préparation des différents symboles (i=1, ..., l) à envoyer sur les trames suivantes k, k+1, ..., k+N vers les différents abonnés A, B, C, D, ... : canaux, emplacements de fréquence respectifs dans le canal, informations respectives à transmettre sur ces emplacements fréquentiels,
• Dans chaque noeud, envoi de l'ensemble des canaux, des emplacements de fréquence, des symboles à la partie LMAC (Lower MAC) et au modem (couche PHY).
Au niveau LMAC, avant le début de chaque trame :
• Application sur le synthétiseur RF du numéro de canal désiré pour la trame à venir.
Au niveau LMAC, juste avant chaque symbole à transmettre :
• Dans le point central, envoi à la couche PHY des informations binaires à transmettre sur les emplacements fréquentiels respectifs pour fabrication par la couche PHY du symbole à transmettre,
la partie réception étant totalement réciproque.

3. Procédé selon la revendication 1, correspondant à un cas à accès multi-utilisateurs avec un seul utilisateur par bande, **caractérisé en ce qu'**il comporte au moins les étapes suivantes, les noeuds A, B, C, D étant considérés en synchronisation temporelle, dans les parties LMAC et UMAC :
au niveau UMAC des noeuds A et B, avant le début de chaque trame ou d'un GROUPE de trames :
• Préparation des différents emplacements de fréquence à utiliser pour chaque symbole (i=1, ..., l) dans chaque canal utilisé dans les trames suivantes k, k+1, ..., k+N (N pouvant valoir, selon l'anticipation recherchée, 1 à 4) pour la transmission entre un abonné A et un abonné B :
Couple(nb,ns)_{A, n, i} = tirage_1 (n, i)
pour n : n° de trame allant de k à k+N
pour i : n° de symbole allant de 1 à l
avec nb _{A, n, i} = numéro de la bande à utiliser en trame n
ns_{A, n, i} = numéro de la sous-bande à utiliser au slot i de la trame n.
au niveau UMAC des noeuds C et D, avant le début de chaque trame ou d'un GROUPE de trames :
• Préparation des différents emplacements de fréquence à utiliser pour chaque symbole (i=1, ..., l) dans chaque canal utilisé dans les trames suivantes k, k+1, ..., k+N pour la transmission entre un abonné C et un abonné D :
Couple(nb,ns)_{C, n, i} = tirage_2(n, i)
pour n : n ° de trame allant de k à k+N
pour i : n ° de symbole allant de 1 à l
avec nb_{C, n, i} = numéro de la bande à utiliser en trame n
ns _{C, n, i} = numéro de la sous-bande à utiliser au slot i de la trame n
Fonction « tirage_2 » orthogonale à la fonction « tirage_1 »
au niveau UMAC du noeud A (respectivement B), avant le début de chaque trame ou d'un GROUPE de trames :
• Préparation des différents symboles (i=1, l) à envoyer (respectivement recevoir) sur les trames suivantes k, k+1, ..., k+N vers l'abonné B (respectivement de l'abonné A) : canal, emplacement de fréquence dans le canal, informations à transmettre sur l'emplacements fréquentiel de chaque symbole successif considéré,
• Envoi de l'ensemble des canaux, des emplacements de fréquence, des symboles à la partie LMAC (respectivement réception des symboles),
au niveau UMAC du noeud C (respectivement D), avant le début de chaque trame ou d'un GROUPE de trames :
• Préparation des différents symboles (i=1, l) à envoyer (respectivement recevoir) sur les trames suivantes k, k+1, ..., k+N vers l'abonné D (respectivement de l'abonné C) : canal, emplacement de fréquence dans le canal, informations à transmettre sur l'emplacement fréquentiel de chaque symbole successif considéré,
• Envoi de l'ensemble des canaux, des emplacements de fréquence, des symboles à la partie LMAC (respectivement réception des symboles),
au niveau LMAC pour tous les noeuds, avant le début de chaque trame :
• Application sur le synthétiseur RF du numéro de canal désiré pour la trame à venir,
au niveau LMAC, juste avant chaque symbole transmis (respectivement à la fin de chaque symbole reçu) :
• Envoi à (respectivement réception de) la couche PHY des informations binaires à transmettre (respectivement à recevoir) sur les emplacements fréquentiels respectifs pour fabrication par la couche PHY du symbole à transmettre/recevoir.

4. Procédé selon la revendication 1, correspondant à un cas à accès multi-utilisateurs généralisé, **caractérisé en ce qu'**il comporte au moins les étapes suivantes :
au niveau UMAC de tous les noeuds, avant le début de chaque trame ou d'un GROUPE de trames :
• Préparation des différents emplacements de fréquence à utiliser pour chaque symbole (i=1, l) dans chaque canal utilisé dans les trames suivantes k, k+1, ..., k+N (N pouvant valoir, selon l'anticipation recherchée, 1 à 4) pour la transmission entre l'abonné A et l'abonné B:
Couple(nb,ns)_{A, n, i} = tirage_1 (n, i)
pour n : n° de trame allant de k à k+N
pour i : n ° de symbole allant de 1 à l
avec nb _{A, n, i} = numéro de la bande à utiliser en trame n
ns _{A, n, i} = numéro de la sous-bande à utiliser au slot i de la trame n,
au niveau UMAC des noeuds C et D, avant le début de chaque trame ou
d'un GROUPE de trames :
• Préparation des différents emplacements de fréquence à utiliser pour chaque symbole (i=1, l) dans chaque canal utilisé dans les trames suivantes k, k+1, ..., k+N pour la transmission entre l'abonné C et l'abonné D :
Couple(nb,ns)_{C, n, i} = tirage_1 bis(n, i)
pour n : n° de trame allant de k à k+N
pour i : n° de symbole allant de 1 à l
avec nb _{C, n, i} = numéro de la bande à utiliser en trame n
ns _{C, n, i} = numéro de la sous-bande à utiliser au slot i de la trame n
Fonction « tirage_1 bis » orthogonale à la fonction « tirage_1 » pour le tirage des slots dans le canal courant, les canaux tirés étant identiques entre les deux fonctions.
• Idem pour la préparation des emplacements de fréquence à utiliser pour les transmissions entre les abonnés E et F d'une part et G et H d'autre part mais en utilisant les fonctions tirage_2 et tirage_2bis.
• Idem pour la préparation des emplacements de fréquence à utiliser pour les transmissions entre les abonnés I et J d'une part et K et L d'autre part mais en utilisant les fonctions tirage_3 et tirage_3bis.
au niveau UMAC du noeud A, avant le début de chaque trame ou d'un GROUPE de trames :
• Préparation des différents symboles (i=1, l) à envoyer sur les trames suivantes k, k+1, ..., k+N vers l'abonné B : canal, emplacement de fréquence dans le canal, informations à transmettre sur l'emplacement fréquentiel de chaque symbole successif considéré
• Envoi de l'ensemble des canaux, des emplacements de fréquence, des symboles à la partie LMAC.
au niveau UMAC du noeud C, avant le début de chaque trame ou d'un GROUPE de trames :
• Préparation des différents symboles (i=1, l) à envoyer sur les trames suivantes k, k+1, ..., k+N vers l'abonné D : canal, emplacement de fréquence dans le canal, informations à transmettre sur l'emplacement fréquentiel de chaque symbole successif considéré
• Envoi de l'ensemble des canaux, des emplacements de fréquence, des symboles à la partie LMAC.
au niveau LMAC pour tous les noeuds, avant le début de chaque trame :
• Application sur le synthétiseur RF du numéro de canal désiré pour la trame à venir,
au niveau LMAC, pour tous les noeuds émetteurs, juste avant chaque symbole à transmettre :
• Envoi à la couche PHY des informations binaires à transmettre sur les emplacements fréquentiels respectifs pour fabrication par la couche PHY du symbole à transmettre,
la partie réception étant totalement réciproque.

5. Utilisation du procédé selon l'une des revendications 1 à 4 pour les transmissions mettant en oeuvre le protocole 802.16.

## Claims

1. A communication process wherein the data passes over frequency supports which are variable over time, a frequency support being defined as a pair of carrier subsets in a channel of a set of frequency channels (RF); the selection of frequency supports originating from a pseudo-random selection and **characterised in that** two independent pseudo-random hopping laws are combined, the first being adapted to channel hopping and the second being adapted to sub-channel hopping.

2. The process according to claim 1, corresponding to a centralised multiple-user access case wherein a central point transmits different information flows towards one or more subscribers, **characterised in that** it includes at least the following steps:
at the UMAC (Upper MAC) access layer, before the start of each frame or of a set of frames:
• preparing the different frequency locations to be used for each symbol (i=1, ..., 1) in each channel used in the following frames k, k+1, ..., k+N (N being an integer) for transmission between the central point and the first subscriber A:
pair (nb, ns) _{A, n, i}=selection(n, i)
for n: frame No. ranging from k to k+N
for i: symbol No. ranging from 1 to 1
where nb = the band number to be used
ns = the number of the sub-band to be used
• preparing the different frequency locations to be used for each symbol (i=1, ..., 1) in each channel used in the following frames k, k+1, ..., k+N for transmission between the central point and subscriber B:
nb_{B,n,i}=nb
ns_{B}, ₙ, ᵢ=(ns_{A}, ₙ, ᵢ+1)modulo NS
where NS is the number of sub-bands available in a channel;
wherein these indices represent either physical values or logical values, the physical target values of which are known from a table of correspondence, the physical indices of the sub-bands used are consecutive modulo NS,
• at the central point, preparing the different symbols (i=1, ..., 1) to be sent over the following frames k, k+1, ..., k+N towards the different subscribers A, B, C, D, ...: channels, respective frequency locations in the channel, respective information to be sent over these frequency locations,
• in each node, sending the set of channels, the frequency locations and the symbols to the LMAC (Lower MAC) section and to the modem (PHY layer);
at the LMAC, before the start of each frame:
• applying the channel number required for the next frame to the RF synthesiser;
at the LMAC, just before each symbol to be transmitted:
• at the central point, sending to the PHY layer the binary information to be transmitted over the respective frequency locations for production by the PHY layer of the symbol to be transmitted,
the receiving section being entirely reciprocal.

3. The process according to claim 1, corresponding to a multiple-user access case with a single user per band, **characterised in that** it includes at least the following steps, the nodes A, B, C, D being considered time synchronised, in the LMAC and UMAC sections:
at the UMAC of nodes A and B, before the start of each frame or of a SET of frames:
• preparing the different frequency locations to be used for each symbol (i=1, ..., 1) in each channel used in the following frames k, k+1, ..., k+N (N having a possible value, depending on the anticipation sought, of 1 to 4) for transmission between subscriber A and subscriber B:
pair (nb, ns) _{A}, ₙ, ᵢ=selection_1 (n, i)
for n: frame No. ranging from k to k+N
for i: symbol No. ranging from 1 to 1
where nb_{A}, ₙ, ᵢ = the band number to be used in frame n
nS_{A}, ₙ, ᵢ = the number of the sub-band to be used in slot i of frame n;
at the UMAC of nodes C and D, before the start of each frame or of a SET of frames:
• preparing the different frequency locations to be used for each symbol (i=1, ...,1) in each channel used in the following frames k, k+1, ..., k+N for transmission between subscriber C and subscriber D:
pair (nb, ns) _{c}, ₙ, ᵢ=selection_2 (n, i)
for n: frame No. ranging from k to k+N
for i: symbol No. ranging from 1 to 1
where nb_{c}, ₙ,ᵢ = the band number to be used in frame n
ns_{c}, ₙ,ᵢ = the number of the sub-band to be used in slot i of frame n;
function "selection_2" orthogonal to the function "selection_1";
at the UMAC of node A (respectively B), before the start of each frame or of a SET of frames:
• preparing the different symbols (i=1, 1) to be sent (respectively received) over the following frames k, k+1, ..., k+N towards subscriber B (respectively from subscriber A): channel, frequency location in the channel, information to be sent over the frequency locations of each successive symbol considered,
• sending the set of channels, frequency locations and symbols to the LMAC section (respectively receiving of the symbols),
at the UMAC of node C (respectively D), before the start of each frame or of a SET of frames:
• preparing the different symbols (i=1, 1) to be sent (respectively received) over the following frames k, k+1, ..., k+N towards subscriber D (respectively from subscriber C): channel, frequency location in the channel, information to be sent over the frequency locations of each successive symbol considered,
• sending the set of channels, frequency locations and symbols to the LMAC section (respectively receiving of the symbols),
at the LMAC for all of the nodes, before the start of each frame:
• applying the channel number required for the next frame to the RF synthesiser, at the LMAC, just before each transmitted signal (respectively at the end of each received signal):
• sending (respectively receiving of) the PHY layer of the binary information to be transmitted (respectively to be received) over the respective frequency locations for production by the PHY layer of the symbol to be transmitted/received.

4. The process according to claim 1, corresponding to a generalised multiple-user case, **characterised in that** it includes at least the following steps:
at the UMAC of all of the nodes, before the start of each frame or of a SET of frames:
• preparing the different frequency locations to be used for each symbol (i=1, ..., 1) in each channel used in the following frames k, k+1, ..., k+N (N having a possible value, depending on the required anticipation, of 1 to 4) for transmission between subscriber A and subscriber B:
pair (nb, ns) _{A}, ₙ, ᵢ=selection_1 (n, i)
for n: frame No. ranging from k to k+N
for i: symbol No. ranging from 1 to 1
where nb_{A}, ₙ, ᵢ = the band number to be used in frame n
ns_{A}, ₙ, ᵢ = the number of the sub-band to be used in slot i of frame n,
at the UMAC of nodes C and D, before the start of each frame or of a SET of frames:
• preparing the different frequency locations to be used for each symbol (i=1, ...,1) in each channel used in the following frames k, k+1, ..., k+N for transmission between subscriber C and subscriber D:
pair (nb, ns) _{C}, ₙ, ᵢ=selection_1bis (n, i)
for n: frame No. ranging from k to k+N
for i: symbol No. ranging from 1 to 1
where nb_{c}, ₙ, ᵢ = the band number to be used in frame n
ns_{C,n,i} = the number of the sub-band to be used in slot i of frame n;
function "selection_1bis" orthogonal to the function "selection_1" for selecting the slots in the current channel, the selection channels being identical between the two functions.
• as above for preparing the frequency locations to be used for the transmissions between subscribers E and F, on the one hand, and G and H, on the other hand, but using the selection_2 and selection_2bis functions;
• as above for preparing the frequency locations to be used for the transmissions between subscribers I and J, on the one hand, and K and L, on the other hand, but using the selection_3 and selection_3bis functions;
at the UMAC of node A, before the start of each frame or of a SET of frames:
• preparing the different symbols (i=1, 1) to be sent over the following frames k, k+1, ..., k+N towards subscriber B: channel, frequency location in the channel, information to be transmitted over the frequency location of each considered successive symbol,
• sending the set of channels, frequency locations, symbols to the LMAC section;
at the UMAC of node C, before the start of each frame or of a SET of frames:
• preparing the different symbols (i=1, 1) to be sent over the following frames k, k+1, ..., k+N towards subscriber B: channel, frequency location in the channel, information to be sent over the frequency location of each successive symbol considered,
• sending the set of channels, frequency locations, symbols to the LMAC section;
at the LMAC for all of the nodes, before the start of each frame:
• applying the channel number required for the next frame to the RF synthesiser, at the LMAC, for all of the emitting nodes, just before each symbol to be transmitted:
• sending the PHY layer of the binary information to be transmitted over the respective frequency locations for production by the PHY layer of the symbol to be transmitted,
the receiving section being entirely reciprocal.

5. The use of the process according to any one of claims 1 to 4 for transmissions implementing the 802.16 protocol.

## Patentansprüche

1. Kommunikationsverfahren, bei dem die Daten über im Laufe der Zeit veränderliche Frequenzstützen passieren, wobei eine Frequenzstütze als ein Trägerteilmengenpaar in einem Kanal aus einem Satz von Frequenzkanälen (RF) definiert ist; wobei die Auswahl der Frequenzstützen von einer pseudozufälligen Selektion stammt, **dadurch gekennzeichnet, dass** zwei unabhängige pseudozufällige Sprunggesetze kombiniert werden, wobei das erste zum Kanalspringen und das zweite zum Subkanalspringen angepasst sind.

2. Verfahren nach Anspruch 1, entsprechend einem zentralisierten Mehrbenutzer-Zugriffsfall, bei dem eine Zentralstelle verschiedene Informationsflüsse zu einem oder mehreren Teilnehmern sendet, **dadurch gekennzeichnet, dass** es wenigstens die folgenden Schritte beinhaltet:
auf der UMAC-(Upper MAC)-Zugriffsschicht, vor Beginn jedes Frame oder Frame-Satzes:
• Vorbereiten der verschiedenen Frequenzpositionen, die für jedes Symbol (i=1, ..., 1) in jedem Kanal zu benutzen sind, der in den folgenden Frames k, k+1, ..., k+N (wobei N eine ganze Zahl ist) für die Übertragung zwischen der Zentralstelle und dem ersten Teilnehmer A benutzt wird:
Paar (nb, ns) _{A, n, i}=Selektion(n, i)
für n: Frame-Nr. im Bereich von k bis k+N für i: Symbol-Nr. im Bereich von 1 bis I
wobei nb = Nummer des zu benutzenden Bandes
ns = Nummer des zu benutzenden Subbandes
• Vorbereiten der verschiedenen Frequenzpositionen, die für jedes Symbol (i=1, ..., 1) in jedem Kanal zu benutzen sind, der in den folgenden Frames k, k+1, ..., k+N für die Übertragung zwischen der Zentralstelle und Teilnehmer B benutzt wird:
nb_{B,n,i}=nb
ns_{B}, ₙ, ᵢ=(ns_{A, n, i}+ 1 )modulo NS
wobei NS die Zahl der in einem Kanal verfügbaren Subbänder ist;
diese Indexe repräsentieren entweder physikalische Werte oder logische Werte, deren physikalische Zielwerte über eine Korrespondenztabelle bekannt sind, wobei die physikalischen Indexe der verwendeten Subbänder konsekutiv modulo NS sind,
• an der Zentralstelle, Vorbereiten der verschiedenen Symbols (i=1, ..., 1), die über die folgenden Frames k, k+1, ..., k+N zu den verschiedenen Teilnehmern A, B, C, D, ... gesendet werden sollen: Kanäle, jeweilige Frequenzpositionen in dem Kanal, jeweilige Informationen, die über diese Frequenzpositionen zu senden sind;
• in jedem Knoten, Senden des Satzes von Kanälen, Frequenzpositionen, Symbolen zum LMAC-(Lower MAC)-Teil und zum Modem (PHY-Schicht);
am LMAC, vor Beginn jedes Frame:
• Anwenden der Nummer des gewünschten Kanals für den nächsten Frame auf den RF-Synthesiser;
am LMAC, unmittelbar vor dem Senden jedes Symbols:
• in der Zentralstelle, Senden der über die jeweiligen Frequenzpositionen zu übertragenden Binärinformationen zur PHY-Schicht zum Erzeugen des zu übertragenden Symbols durch die PHY-Schicht,
wobei der Empfangsteil gänzlich reziprok ist.

3. Verfahren nach Anspruch 1, entsprechend einem Mehrbenutzer-Zugriffsfall mit einem einzigen Benutzer pro Band, **dadurch gekennzeichnet, dass** es wenigstens die folgenden Schritte beinhaltet, wobei die Knoten A, B, C, D als zeitlich synchronisiert angesehen werden, im LMAC- und im UMAC-Teil:
am UMAC von Knoten A und B, vor Beginn jedes Frame oder eines SATZES von Frames:
• Vorbereiten der verschiedenen Frequenzpositionen, die für jedes Symbol (i=1, ..., 1) in jedem Kanal zu benutzen sind, der in den folgenden Frames k, k+1, ..., k+N (wobei N einen möglichen Wert, gemäß dem gesuchten Vorgriff, von 1 bis 4 hat) benutzt wird, für die Übertragung zwischen Teilnehmer A und Teilnehmer B:
Paar (nb, ns) _{A, n, i}=Selektion₋1 (n, i)
für n: Frame-Nr. im Bereich von k bis k+N
für i: Symbol-Nr. im Bereich von 1 bis 1
wobei nb_{A, n, i} = Nummer des in Frame n zu benutzenden Bandes
ns_{A, n, i} = Nummer des in Slot i von Frame n benutzenden Subbandes;
am UMAC von Knoten C und D, vor Beginn jedes Frame oder eines SATZES von Frames:
• Vorbereiten der verschiedenen Frequenzpositionen, die für jedes Symbol (i=1, ...,1) in jedem Kanal benutzt werden sollen, der in den folgenden Frames k, k+1, ..., k+N für die Übertragung zwischen Teilnehmer C und Teilnehmer D benutzt wird:
Paar (nb, ns) _{C, n, i}=Selektion_2 (n, i)
für n: Frame-Nr. im Bereich von k bis k+N
für i: Symbol-Nr. im Bereich von 1 bis 1
wobei nb_{C, n, i} = Nummer des in Frame n zu benutzenden Bandes
ns_{C, n, i} = Nummer des in Slot i von Frame n zu benutzenden Subbandes;
Funktion "Selektion_2" orthogonal zur Funktion "Selektion_1";
am UMAC von Knoten A (bzw. B), vor Beginn jedes Frame oder eines SATZES von Frames:
• Vorbereiten der verschiedenen Symbols (i=1, 1), die über die folgenden Frames k, k+1, ..., k+N zu Teilnehmer B (bzw. von Teilnehmer A) gesendet (bzw. empfangen) werden sollen: Kanal, Frequenzposition im Kanal, über die Frequenzpositionen jedes berücksichtigten sukzessiven Symbols zu sendende Informationen,
• Senden des Satzes von Kanälen, Frequenzpositionen, Symbolen zum LMAC-Teil (bzw. Empfangen der Symbole),
am UMAC von Knoten C (bzw. D), vor Beginn jedes Frame oder eines SATZES von Frames:
• Vorbereiten der verschiedenen Symbole (i=1, 1), die über die folgenden Frames k, k+1, ..., k+N zu Teilnehmer D (bzw. von Teilnehmer C) gesendet (bzw. empfangen) werden sollen: Kanal, Frequenzposition im Kanal, über die Frequenzpositionen jedes berücksichtigten sukzessiven Symbols zu sendende Informationen,
• Senden des Satzes von Kanälen, Frequenzpositionen und Symbolen zum LMAC-Teil (bzw. Empfangen der Symbole),
am LMAC für alle Knoten, vor Beginn jedes Frame:
• Anwenden der Nummer des für den nächsten Frame gewünschten Kanals auf den RF-Synthesiser,
am LMAC, unmittelbar vor jedem übertragenen Signal (bzw. am Ende jedes empfangenen Symbols):
• Senden (bzw. Empfangen) der über die jeweiligen Frequenzpositionen zu übertragenden (bzw. zu empfangenden) Binärinformationen zum Produzieren des zu sendenden/zu empfangenden Symbols durch die PHY-Schicht.

4. Verfahren nach Anspruch 1, entsprechend einem generalisierten Mehrbenutzerfall, **dadurch gekennzeichnet, dass** es wenigstens die folgenden Schritte beinhaltet:
am UMAC aller Knoten, vor Beginn jedes Frame oder eines SATZES von Frames:
• Vorbereiten der verschiedenen Frequenzpositionen, die für jedes Symbol (i=1, ..., 1) in jedem Kanal zu benutzen sind, der in den folgenden Frames k, k+1, ..., k+N (wobei N einen möglichen Wert, gemäß dem gesuchten Vorgriff, von 1 bis 4 hat) für die Übertragung zwischen Teilnehmer A und Teilnehmer B benutzt wird:
Paar (nb, ns) _{A, n, i}=Selektion_1 (n, i)
für n: Rahmen-Nr. im Bereich von k bis k+N für i: Symbol-Nr. im Bereich von 1 bis 1
wobei nb_{A, n, i} = Numer des in Frame n zu benutzenden Bandes
ns_{A, n, i} = Nummer des in Slot i von Frame n zu benutzenden Subbandes,
am UMAC von Knoten C und D, vor Beginn jedes Frame oder eines SATZES von Frames:
• Vorbereiten der verschiedenen Frequenzpositionen, die für jedes Symbol (i=1, ...,1) in jedem Kanal zu benutzen sind, der in den folgenden Frames k, k+1, ..., k+N für die Übertragung zwischen Teilnehmer C und Teilnehmer D benutzt wird:
Paar (nb, ns) _{C,n,i}=Selektion_1bis (n, i)
für n: Frame-Nr. im Bereich von k bis k+N
für i: Symbol-Nr. im Bereich von 1 bis 1
wobei nb_{C, n, i} = Nummer des in Frame n zu benutzenden Bandes
ns_{C, n, i} = Nummer des in Slot i von Frame n zu benutzenden Subbandes;
Funktion "Selektion_1bis" orthogonal zu Funktion "Selektion_1" für die Selektion der Slots im aktuellen Kanal, wobei die selektierten Kanäle zwischen den beiden Funktionen identisch sind;
• wie oben für die Vorbereitung der für die Übertragungen zwischen Teilnehmer E und F einerseits und G und H andererseits zu benutzenden Frequenzpositionen, aber unter Verwendung der Funktionen Selektion_2 und Selektion_2 bis;
• wie oben für die Vorbereitung der für die Übertragungen zwischen Teilnehmer I und J einerseits und K und L andererseits zu benutzenden Frequenzpositionen, aber unter Verwendung der Funktionen Selektion_3 und Selektion_3bis;
am UMAC von Knoten A, vor Beginn jedes Frame oder eines SATZES von Frames:
• Vorbereiten der verschiedenen Symbole (i=1, 1), die über die folgenden Frames k, k+1, ..., k+N zu Teilnehmer B gesendet werden sollen: Kanal, Frequenzposition im Kanal, über die Frequenzposition jedes berücksichtigten sukzessiven Symbols zu übertragende Informationen,
• Senden des Satzes von Kanälen, Frequenzpositionen, Symbolen zum LMAC-Teil;
am UMAC von Knoten C, vor Beginn jedes Frame oder eines SATZES von Frames:
• Vorbereiten der verschiedenen Symbole (i=1, 1), die über die folgenden Frames k, k+1, ..., k+N zu Teilnehmer B zu senden sind: Kanal, Frequenzposition im Kanal, über die Frequenzposition jedes berücksichtigten sukzessiven Symbols zu sendende Informationen,
• Senden des Satzes von Kanälen, Frequenzpositionen, Symbolen zum LMAC-Teil;
am LMAC für alle Knoten, vor Beginn jedes Frame:
• Anwenden der Nummer des für das nächste Frame gewünschten Kanals auf den RF-Synthesiser,
am LMAC für alle emittierenden Knoten, unmittelbar vor jedem zu übertragenden Symbol:
• Senden der über die jeweiligen Frequenzpositionen zu übertragenden Binärinformationen zur PHY-Schicht zum Produzieren des zu übertragenden Symbols durch die PHY-Schicht,
wobei der Empfangsteil gänzlich reziprok ist.

5. Anwendung des Verfahrens nach einem der Ansprüche 1 bis 4 für Übertragungen, bei denen das 802.16 Protokoll implementiert wird.
